(19) Europäisches Patentamt
European Patent Office
Office européen des brevets

(11) EP 4 110 838 B1

(12) **EUROPEAN PATENT SPECIFICATION**

(45) Date of publication and mention of the grant of the patent:
**25.12.2024 Bulletin 2024/52**

(21) Application number: **22722778.2**

(22) Date of filing: **13.04.2022**

(51) International Patent Classification (IPC):
***C09K 8/12*** (2006.01) ***C09K 8/40*** (2006.01)
***C09K 8/84*** (2006.01) ***C09K 8/88*** (2006.01)
***C04B 28/02*** (2006.01) ***C09K 8/467*** (2006.01)
***C08F 220/58*** (2006.01) ***C04B 24/16*** (2006.01)

(52) Cooperative Patent Classification (CPC):
(C-Sets available)
**C09K 8/12; C04B 24/163; C04B 28/02; C08F 220/585; C09K 8/40; C09K 8/467; C09K 8/845; C09K 8/882** (Cont.)

(86) International application number:
**PCT/EP2022/059952**

(87) International publication number:
**WO 2022/233555 (10.11.2022 Gazette 2022/45)**

# (54) WATER-SOLUBLE ASSOCIATIVE AMPHOTERIC POLYMER AS A RHEOLOGY MODIFIER FOR SUBTERRANEAN TREATMENTS

WASSERLÖSLICHES ASSOZIATIVES AMPHOTERES POLYMER ALS RHEOLOGIEMODIFIKATOR FÜR UNTERIRDISCHE BEHANDLUNGEN

POLYMÈRE AMPHOTÈRE ASSOCIATIF HYDROSOLUBLE EN TANT QUE MODIFICATEUR DE RHÉOLOGIE POUR DES TRAITEMENTS SOUTERRAINS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.05.2021 FR 2104708**

(43) Date of publication of application:
**04.01.2023 Bulletin 2023/01**

(73) Proprietor: **SNF Group**
**42160 Andrézieux-Bouthéon (FR)**

(72) Inventors:
- **BRAUN, Olivier**
  **42160 Andrézieux-Bouthéon (FR)**
- **GIOVANNETTI, Bruno**
  **42160 Andrézieux-Bouthéon (FR)**
- **MUHAMMED, Farag**
  **Riceboro, Georgia 31323 (FR)**

(74) Representative: **Cabinet Laurent & Charras**
**Le Contemporain**
**50 Chemin de la Bruyère**
**69574 Dardilly Cedex (FR)**

(56) References cited:
**CN-A- 105 670 576**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C04B 28/02, C04B 22/0026, C04B 24/163, C04B 40/0263;**
**C08F 220/585, C08F 220/56, C08F 226/02;**
**C08F 220/585, C08F 226/02;**
**C08F 220/585, C08F 226/02, C08F 226/02**

## Description

### FIELD OF THE INVENTION

This invention relates to a water-soluble associative amphoteric polymer and its use as a subterranean drilling or treatment fluid, for example in the fields of subterranean hydrocarbon recovery, construction, or geothermal energy.

### PRIOR ART

During drilling operations, whether for oil wells or in construction, a drilling fluid circulates between the earth's surface and the bottom of the borehole. The drilling fluid is usually injected inside the drill rod. It then passes through the drill bit before returning to the earth's surface through a ring. A gap between the drill rod and a tube surrounding the drill rod prevents rock and soil debris from rising, and the drilling fluid can then be recovered, treated, and reused. Drilling fluid has several critical roles in drilling operations, including lubrication and cooling of the drill bit, or removal of generated rock chips.

To enable the drilling fluid to perform these roles, a weighting agent (insoluble particles such as baryte or hematite) or a rheology modifier may be added to the fluid. This rheology modifier makes it possible to ensure the suspension of the weighting agent and for the waste material to be removed by making the drilling fluid more viscous. By allowing the suspension of the weighting agent, the density of the fluid is increased, which prevents the well from collapsing onto itself or the drilling fluid from seeping into the walls of the well. These two phenomena are due to a pressure difference between the drilling fluid and the earth. The rheological modifier helps compensate for this pressure difference. Choosing the rheology modifier is therefore very important, especially since it is subject to many constraints. These stresses may be mechanical with a risk of degradation due to shearing during the passage of the drilling fluid through the rod and into the drill bit. They may also be physicochemical due to high temperatures, extreme pH, or the presence of free radicals, especially in deep drilling operations. Furthermore, they may be due to ionic interactions when the injection fluid is highly charged with salts.

Polyacrylamides have long been used as rheology modifiers in several fields. The rheological modification properties of these polymers are highly dependent on their molecular weight. CN 105 670 576 teaches a drilling fluid comprising an amphoteric terpolymer comprising less than 75mol% of sulfonic acid monomer.

In general, in the case of polyacrylamides, having anionic charges of carboxylate type, multivalent salts will interact with the ionic groups of the polymer causing a contraction of the chains, even a precipitation of the polymer, thus reducing the thickening effect of the latter. When drilling at high temperature and/or pH, acrylamide may hydrolyze rapidly, causing an acceleration of the phenomenon described above and thus participating in the reduction of viscosity. Finally, the combination of reducing species and oxygen may lead to the formation of free radicals that will degrade the molecular weight of the rheology modifying polymer and thus reduce its ability to generate viscosity.

Associative monomers that are known to be temperature- and salt-resistant may be incorporated into the rheology modifying polymer. Associative monomers generally have a chemical function that allows them to react and be integrated into a polymer and a long chain with a rather hydrophobic character generally having between 6 and 30 carbon atoms. The hydrophobic chains will, depending on the physicochemical conditions of the drilling fluid, interact and form a reversible physical network. This network allows to improve the viscosity while keeping good resistance to the various constraints seen above.

CN 103113518 and CN 102372818 describe the use of associative amphoteric polymers as thickeners in the drilling field.

Although these polymers have better resistance to temperature and salts than conventional polymers, the risk of degradation and lack of stability remains significant, especially at temperatures above 100°C and/or at salinities above 2000 mg/L.

WO 2014/183495 therefore proposes an alternative by using an associative amphoteric polymer in combination with a surfactant as a thickener for a fracturing fluid. The surfactant is usually added during the preparation of the fracturing fluid.

CN 103,320,114 and CN 107,841,303 describe a fracturing fluid containing a polymer that may include a small amount of sulfonic acid monomer.

CN 108,192,588 describes a fracturing fluid comprising a polymer acrylamide (55-70 parts by weight), acrylic acid (15-20 parts by weight), ATBS (15-20 parts by weight; ATBS = 2-acrylamido-2-methylpropane sulfonic acid), rigid monomer (0.5-3 parts by weight) and hydrophobic monomer (0.1-1.0 parts by weight).

CN 106,190,088 describes a fracturing fluid comprising a polymer of sodium acrylate (6-8 wt%), acrylamide (18-23 wt%), carboxylic acid monomer (1-2 wt%), anionic functional monomer (3-4 wt%), cationic functional monomer (3-5 wt%).

Many studies exist on the synergistic effect between associative amphoteric polymers and surfactants, such

as the document, "Effect of surfactant on the solution properties of hydrophobically modified polyacrylamide" by S. Biggs, J. Selb, and F. Candau. Surfactants increase the lifetime of hydrophobic interactions between polymer chains, thus improving the viscosity of the solution in which they are found. Surfactants may be added during the preparation of polymers, especially by emulsion polymerization, or during the preparation of drilling fluids.

Despite all the progress that has been made in the field of rheology modifiers for drilling, there are still unmet needs in this area today. As drilling is done at greater and greater depths, in increasingly extreme conditions, whether in terms of temperature, pH, presence of free radicals or salinity (large quantity of salts), there is still a need for rheology modifiers that can be effective regardless of the underground conditions.

Surprisingly, the applicant discovered that the conditions preparation of the rheology modifier and its monomeric composition improve its performance and resistance to extreme conditions (high temperature, pH, free radicals, high salinity).

The preparation of the polymers of the invention is part of a general principle of improving the performance of products and more particularly of improving the rheology modifying power. The improved performance of the polymers according to the invention makes it possible to reduce the amount of product needed for the application, which therefore implies a reduction in the release of greenhouse gases such as $CO_2$ associated with the manufacture and use of synthetic polymers.

## DISCLOSURE OF THE INVENTION

This invention relates to a water-soluble associative amphoteric polymer of at least one monomer derived from a sulfonic acid and/or one of its salts and at least one associative cationic monomer of formula (I):

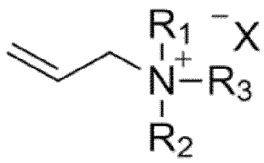

(I)

With:

$R_1$, $R_2$ being, independently of each other, a hydrogen, $CH_3$, or $C_2H_5$;
$R_3$: an alkyl, arylene-alkyl or aryl-alkyl chain having from 8 to 50 carbons;
$X^-$: a counterion of negative charge, for example a halide, in particular bromide, chloride, iodide or fluoride;
the polymer is obtained by polymerization of the monomers in the absence of surfactant(s);
the amount of monomer derived from a sulfonic acid and/or one of its salts is at least 75 mol%, based on the number of polymerized monomer moles.

This invention also relates to a method for preparing said water-soluble associative amphoteric polymer.

This invention also relates to the use of said water-soluble associative amphoteric polymer as a rheology modifier and/or suspending agent.

This invention also relates to a fluid, advantageously a drilling fluid, comprising said water-soluble associative amphoteric polymer.

Finally, this invention also relates to the use of a subterranean drilling or treatment fluid comprising said water-soluble associative amphoteric polymer for subterranean uses, particularly in the fields of drilling, construction, and geothermal energy.

### Description of the Invention

According to this invention, the term "polymer" refers to a copolymer of at least two different ionic monomers of different ionicity. It is thus a copolymer of (i) at least one anionic monomer, (ii) at least one cationic monomer, (iii) optionally at least one non-ionic monomer and, (iv) optionally at least one zwitterionic monomer.

By water-soluble polymer, we mean a polymer which gives an aqueous solution without insoluble particles when dissolved under agitation for 4 hours at 25°C and with a concentration of 5 $g.l^{-1}$ in deionized water

By underground use, we mean all uses that take place under the surface of the earth. For example, and without limitation, a subsurface use may be for drilling an oil well, an enhanced oil recovery process by sweeping a subsurface formation with a polymer solution, a hydraulic fracturing operation, oil well water permeability modification operations such as conformance operations, or for building or tunneling construction.

### Monomer derived from a sulfonic acid and/or one of its salts

The invention is based on a specific combination of monomers and the absence of surfactants during their polymerization.

Preferably, the monomer derived from a sulfonic acid and/or one of its salts has a single ethylenic unsaturation (double bond between two carbon atoms).

The monomer derived from a sulfonic acid is advantageously selected from the group consisting of vinyl sulfonic acids, preferably from 2-acrylamido-2-methylpropane sulfonic acid (ATBS), 2-methacrylamido-2-methylpropane sulfonic acid, styrene sulfonic acid, allyl ether sulfonic acid derivatives or 3-allyloxy-2-hydroxypropane sulfonic acid. Preferably, the monomer derived from a sulfonic acid is 2-acrylamido-2-methylpropane sulfonic acid. In one particular embodiment of the invention, the monomer derived from a sulfonic acid may be salified.

By salified, we mean that the acid function of the sulfonic acid group is replaced by a salt neutralizing the negative charge of the sulfonate function. In other words, the non-salified form corresponds to the acidic form of the monomer, for example $-S(=O)_2OH$ in the case of the sulfonic acid function, while the neutralized form of the monomer corresponds to the $-S(=O)_2-O^-A^+$ form, $A^+$ corresponding to a salt. The neutralization of the sulfonic acid function may be partial or total.

The salified form corresponds advantageously to the salts of alkali metals (Li, Na, K...), alkaline earth metals (Ca, Mg...) or ammonium (for example, the ammonium ion or the tertiary ammonium). The preferred salts are sodium salts.

Salification may be done before, during or after polymerization.

In one particular embodiment of the invention, the sulfonic acid monomer comprises between 0% and 100% salified form, for example between 0% and 50% or between 50% and 100%.

In general, the terms "between X and Y" and "from X to Y" include the terminals X and Y. In one particular embodiment of the invention, the monomer derived from a sulfonic acid is 2-acrylamido-2-methylpropane sulfonic acid in its hydrated form. The hydrated form of 2-acrylamido-2-methylpropane sulfonic acid is one particular form of 2-acrylamido-2-methylpropane sulfonic acid obtainable by controlled crystallization of 2-acrylamido-2-methylpropane sulfonic acid monomer. US 10759746 describes how to obtain the hydrated form of 2-acrylamido-2-methylpropane sulfonic acid.

Generally, the amount of monomer derived from a sulfonic acid in the water-soluble associative amphoteric polymer is between 75 mol% and 99.999 mol%. It is generally at least 80 mol%, preferably at least 85 mol%, more preferably at least 90 mol%, more preferably at least 95 mol%, even more preferably at least 99 mol%. It may therefore be between 90 and 99.999 mol%.

### Associative cationic monomer of formula (I)

The selection of the associative monomer is also crucial to the invention. Thus, the associative monomer is a cationic monomer of formula **(I)** above.

As already indicated, the $R_3$ group of formula **(I)** is an alkyl, arylene-alkyl or aryl-alkyl chain having from 8 to 50 carbon atoms, preferably between 10 and 38 carbon atoms, and even more preferably between 10 and 30 carbon atoms.

In general, the number of carbon atoms in a group of at least 8 carbon atoms is a number average. For example, a monomer of formula **(I)** in which the $R_3$ group is C16 corresponds to a mixture of monomers of formula (I), with, on average in number, $R_3$ being C16.

In one particular embodiment of the invention, the cationic associative monomer is selected from derivatives of formula (I), wherein $R_3$ is an alkyl, arylene-alkyl or aryl-alkyl chain having 16 to 18 carbon atoms.

In one particular embodiment of the invention, the cationic associative monomer is selected from derivatives of formula (I), wherein $R_3$ is an alkyl, arylene-alkyl or aryl-alkyl chain having 16 carbon atoms.

In one particular embodiment of the invention, the cationic associative monomer is selected from derivatives of formula (I), wherein $R_3$ is an alkyl, arylene-alkyl or aryl-alkyl chain having 18 carbon atoms.

In one preferred embodiment of the invention, the $R_3$ group of formula **(I)** is a linear or branched alkyl chain, more preferably a linear alkyl chain.

Typically, the amount of associative cationic monomers is between 0.001 mol% and 10 mol%. It is generally lower than 5 mol%, preferably lower than 2 mol%, more preferably lower than 1 mol%, even more preferably lower than 0.2 mol%.

### Preparation of the water-soluble associative amphoteric polymer

The applicant has found that improved performance is achieved with the water-soluble associative amphoteric polymer of the invention due to the selection of the component monomers combined with the absence of surfactants

(oil-in-water or water-in-oil) during the polymerization of selected monomers.

According to IUPAC, a surfactant is a substance that decreases the surface tension of the medium in which it is present, and/or the interfacial tension with other phases, and thus is absorbed at the liquid/vapor interface and/or other interfaces.

The water-soluble associative amphoteric polymer of the invention may be obtained according to all the polymerization techniques well known to the person skilled in the art, provided that the polymerization is carried out in the absence of surfactant.

This may include any of the following techniques: solution polymerization; gel polymerization; solvent precipitation polymerization; reactive extrusion polymerization; brine precipitation polymerization.

Thus, the water-soluble associative amphoteric polymer is not obtained by emulsion, direct or reverse polymerization, as these techniques involve the presence of an oil-in-water or water-in-oil surfactant.

The polymerization is usually a free radical polymerization. In the term free radical polymerization, we include free radical polymerization using UV, azo, redox, or thermal initiators as well as controlled radical polymerization (CRP) or matrix polymerization techniques.

The polymerization initiators advantageously used may be any compounds that dissociate into radicals under the polymerization conditions, for example: organic peroxides, hydroperoxides, hydrogen peroxide, persulfates, azo compounds, and redox catalysts. The use of water-soluble initiators is preferred. In some cases, it is advantageous to use mixtures of several polymerization initiators, for example, mixtures of redox catalysts and azo compounds.

In one particular embodiment of the invention, the method for preparing the water-soluble associative amphoteric polymer may comprise a polymer drying step such as spray drying, spray drying and granulation, drum drying, electromagnetic radiation drying (microwave, high frequency) or even fluidized bed drying.

In one particular embodiment of the invention, the polymer is obtained by gel polymerization. The gel polymerization is advantageously followed by drying and grinding to obtain polymer particles of the desired medium size and optionally by sieving to obtain polymer particles with the correct particle size.

In one particular embodiment of the invention, the polymer is obtained by precipitation polymerization.

The solvents that may be used for precipitation polymerization are advantageously polar solvents, preferably water, an alcohol or a ketone, more preferably selected from the group comprising: water, methanol, ethanol, 1-propanol, 2-propanol, 2-methyl-2-propanol, 1-butanol, 2-butanol, dimethylketone, diethylketone, pentan-2-one, butanone, tetrahydropyran, tetrahydrofuran, 2-methyltetrahydrofuran, 1,3-dioxane, 1,4-dioxane, ammonium sulfate brine. The polar solvent mixture is preferably a protic (proton donors) solvent mixture.

**Water-soluble associative amphoteric polymer**

The water-soluble associative amphoteric polymer of the invention may also comprise at least one other anionic monomer and/or at least one other cationic monomer and/or at least one nonionic monomer and/or at least one zwitterionic monomer. Preferably, these monomers have a single ethylenic unsaturation (double bond between two carbon atoms). The other anionic monomer(s) that may be used in the context of the invention may be selected from a broad group. These monomers may have a vinyl function, in particular acrylic, maleic, fumaric, malonic, itaconic, or allylic. They may also contain a carboxylate, phosphonate, phosphate, sulfate, or other anionically charged group. The anionic monomer may be in acid form or in the form of an alkaline earth metal salt, alkali metal salt or ammonium salt. Examples of suitable monomers include acrylic acid; methacrylic acid; itaconic acid; crotonic acid; maleic acid; fumaric acid; strong acid monomers having for example a phosphonic acid function, such as vinyl phosphonic acid, allyl phosphonic acid; and water-soluble salts of these monomers such as their alkali metal, alkaline earth metal, or ammonium salts.

Preferably, the water-soluble associative amphoteric polymer of the invention comprises not more than 24.999 mol% of anionic monomers not derived from sulfonic acid, preferably not more than 19.999 mol%, more preferably not more than 14.999 mol%, more preferably not more than 9.999 mol%, more preferably not more than 4.999 mol%, still more preferably not more than 0.999 mol%.

In one preferred embodiment of the invention, the water-soluble associative amphoteric polymer of the invention does not comprise any other anionic monomers than the sulfonic acid derivative and/or one of its salts.

The cationic monomer(s) that may be used in the context of the invention may be of the vinyl type, in particular of the acrylamide, acrylic, allylic or maleic type possessing an ammonium (advantageously quaternary ammonium) function. We may specifically mention without limitation, quaternized or salified dimethyl aminoethyl acrylate (ADAME); quaternized or salified dimethyl aminoethyl methacrylate (MADAME); dimethyl diallyl ammonium chloride (DADMAC); acrylamido propyl trimethyl ammonium chloride (APTAC); and methacrylamido propyl trimethyl ammonium chloride (MAPTAC).

Preferably, the water-soluble associative amphoteric polymer of the invention comprises not more than 24.999 mol% of other cationic monomers than the associative cationic monomer of formula **(I)** preferably not more than 19.999 mol%, more preferably not more than 14.999 mol%, more preferably not more than 9.999 mol%, more preferably not

more than 4.999 mol%, even more preferably not more than 0.999 mol%.

In one preferred embodiment of the invention, the water-soluble associative amphoteric polymer of the invention does not comprise any cationic monomers other than the cationic associative monomer of formula **(I)** previously described.

The non-ionic monomer(s) suitable for use in the invention may be selected from the group consisting of water-soluble vinyl monomers, and particularly acrylamide; N-isopropylacrylamide; N,N-dimethylacrylamide; N-vinylformamide; acryloyl morpholine; N,N-diethyl acrylamide; N-tert-butyl acrylamide; N-tert-octylacrylamide; N-vinylpyrrolidone; N-vinyl caprolactam; N-vinyl imidazole, hydroxyethyl methacrylamide, hydroxypropyl acrylate, isoprenol and diacetone acrylamide.

Generally, the water-soluble associative amphoteric polymer of the invention comprises not more than 24.999 mol% of non-ionic monomers, preferably not more than 19.999 mol%, more preferably not more than 14.999 mol%, more preferably not more than 9.999 mol%, more preferably not more than 4.999 mol%, still more preferably not more than 0.999 mol%.

In one preferred embodiment of the invention, the water-soluble associative amphoteric polymer of the invention does not comprise a non-ionic monomer.

The water-soluble associative amphoteric polymer of the invention may also contain zwitterionic monomer(s) and/or associative monomers different from the associative cationic monomers of formula **(I)** previously described.

The quantities of the various monomer(s) will be adjusted by the person skilled in the art so as not to exceed 100 mol% when preparing the water-soluble polymers according to the invention.

In one preferred embodiment of the invention, the water-soluble associative amphoteric polymer of the invention is a terpolymer, i.e., a polymer consisting of 3 types of monomers, advantageously a polymer consisting of 3 distinct monomers.

In one preferred embodiment of the invention, the water-soluble associative amphoteric polymer of the invention is a polymer consisting of two types of monomers, i.e., a polymer of at least one sulfonic acid and/or a salt thereof and at least one associative cationic monomer of formula (I).

In one preferred embodiment of the invention, the water-soluble associative amphoteric polymer of the invention consists of at least one non-ionic monomer (advantageously acrylamide), acrylamido-2-methyl-2-propanesulfonic acid and/or one of its salts and at least one associative monomer derived from the formula (I).

In one preferred embodiment of the invention, the water-soluble associative amphoteric polymer of the invention consists of acrylamido-2-methyl-2-propanesulfonic acid and/or one of its salts and at least one associative monomer derived from the formula (I).

In another preferred embodiment of the invention, the water-soluble associative amphoteric polymer of the invention is a polymer consisting of 2-acrylamido-2-methylpropane sulfonic acid and/or one of its salts and at least one associative monomer derived from formula (I), wherein $R_3$ is an alkyl, arylene-alkyl or aryl-alkyl chain having 10 to 38 carbon atoms.

In one preferred embodiment of the invention, the water-soluble associative amphoteric polymer of the invention is a polymer consisting of 2-acrylamido-2-methylpropane sulfonic acid and/or one of its salts and at least one associative monomer derived from formula (I), wherein $R_3$ is an alkyl, arylene-alkyl or aryl-alkyl chain having 8 to 50 carbon atoms, preferably 10 to 30 carbon atoms.

In one preferred embodiment of the invention, the water-soluble associative amphoteric polymer of the invention is a polymer consisting of 2-acrylamido-2-methylpropane sulfonic acid and/or one of its salts and at least one associative monomer derived from formula (I), wherein $R_3$ is an alkyl, arylene-alkyl or aryl-alkyl chain having 16 to 18 carbon atoms. In one preferred embodiment of the invention, the water-soluble associative amphoteric polymer of the invention is a polymer consisting of 2-acrylamido-2-methylpropane sulfonic acid and/or one of its salts and at least one associative monomer derived from formula (I), wherein $R_3$ is an alkyl, arylene-alkyl or aryl-alkyl chain having 16 carbons.

In one preferred embodiment of the invention, the water-soluble associative amphoteric polymer of the invention is a polymer consisting of 2-acrylamido-2-methylpropane sulfonic acid and/or one of its salts and at least one associative monomer derived from formula (I), wherein $R_3$ is an alkyl, arylene-alkyl or aryl-alkyl chain having 18 carbons.

In one preferred embodiment of the invention, the water-soluble associative amphoteric polymer of the invention is a polymer consisting of 2-acrylamido-2-methylpropane sulfonic acid and/or one of its salts and at least one associative monomer derived from formula (I), where $R_3$ is a linear or branched alkyl chain, more preferably a linear alkyl chain.

According to the invention, the water-soluble associative amphoteric polymer may have a linear, branched, crosslinked, star-shaped, or comb-shaped structure. These structures may be obtained, according to the general knowledge of one skilled in the art, for example by selection of the initiator, the transfer agent, the polymerization technique such as controlled radical polymerization known as RAFT (reversible addition-fragmentation chain transfer), NMP (Nitroxide Mediated Polymerization) or ATRP (Atom Transfer Radical Polymerization), the incorporation of structural monomers, or the concentration.

The water-soluble associative amphoteric polymer may also be structured by at least one branching agent, which may advantageously be selected from the group comprising polyethylenically unsaturated monomers (having at

least two unsaturated functions), such as vinyl functions, in particular allyl, acrylic and epoxy functions. Examples include methylene bis acrylamide (MBA), triallylamine, tetraallylammonium chloride, or macroinitiators such as polyperoxides, polyazoids, and polytransfer agents such as polymeric scavengers.

Generally, for a structured polymer, the amount of branching agent is advantageously between 0.001 and 0.15% by weight with respect to the total mass of monomers constituting the water-soluble associative amphoteric polymer. More preferably, it is between 0.01 and 0.1% by weight. The amount of branching agent is determined in relation to the weight of the monomers, it is not included in the percentages (molar or mass) of the monomers. Thus, when the water-soluble associative amphoteric polymer consists of two or three types of monomers, it may be structured.

When the water-soluble associative amphoteric polymer according to the invention comprises a branching agent, the water-soluble associative amphoteric polymer remains water-soluble. Those skilled in the art will know how to adjust the amount of branching agent, and possibly the amount of transfer agent to achieve this result.

In one particular embodiment of the invention, the water-soluble associative amphoteric polymer of the invention does not comprise a branching agent.

Generally, the water-soluble associative amphoteric polymer according to the invention has a weight-average molecular weight advantageously between 0.5 and 30 million g/mol, preferably greater than 1 million g/mol, more preferably greater than 3 million g/mol, even more preferably greater than 5 million g/mol, even more preferably greater than 10 million g/mol, even more preferably greater than 15 million g/mol. The molecular weight is the weight-average molecular weight. The water-soluble associative amphoteric polymer may also have a molecular weight between 100,000 and 500,000 g/mol.

The molecular weight may be determined by the intrinsic viscosity of the polymer. The intrinsic viscosity may be measured by methods known to those skilled in the art and may in particular be calculated from the values of reduced viscosity for different concentrations by a graphical method consisting of plotting the values of reduced viscosity (on the y-axis ) as a function of the concentrations (on the x-axis) and by extrapolating the curve to zero concentration. The intrinsic viscosity value is read on the y-axis or using the least squares method. The molecular weight may then be determined by the Mark-Houwink equation:

$$[\eta] = K M^{\alpha}$$

$[\eta]$ represents the intrinsic viscosity of the polymer determined by the method of measuring viscosity insolution,
K represents an empirical constant.
M represents the molecular weight of the polymer.
$\alpha$ represents the Mark-Houwink coefficient.
K and $\alpha$ depend on the particular polymer-solvent system.

According to this invention, the water-soluble associative amphoteric polymer may be in liquid (for example, in the form of an aqueous solution; it may be used in the form of a concentrated solution, or a dilute solution), gel or solid form when used. Preferably, the water-soluble associative amphoteric polymer according to this invention is in solid form and may be used as such.

The formation of solid particles of the water-soluble associative amphoteric polymer is a step known to those skilled in the art, who will be able to adapt and select the necessary technique depending on the polymerization. Examples include, but are not limited to, spray drying, spray granulation, drum drying, electromagnetic radiation drying (microwave, high frequency) or fluidized bed drying.

The particle size of water-soluble associative amphoteric polymer may vary depending on the polymerization process. Those skilled in the art will know how to adapt the polymer particle size to the application and will know how to adapt the polymer preparation process to produce particles with the desired size.

Generally, the size of the solid particles of water-soluble associative amphoteric polymer is advantageously between 5 nm and 5 mm, more advantageously between 50 nm and 5 mm, preferably between 100 nm and 2 mm, even more preferably between 200 μm and 1 mm. It may in particular be between 50 nm and 1 mm, or between 500 μm and 5 mm, or between 5 μm and 1 mm, or between 100 μm and 1 mm.

By way of example and without limitation, when the particles of water-soluble associative amphoteric polymer are obtained by precipitation polymerization in a solvent or in a brine, the size of the particles is then generally between 50 nm and 2 mm, preferably between 100 μm and 1 mm, even more preferably between 200 μm and 1 mm.

When the water-soluble associative amphoteric polymer particles are obtained by gel polymerization, the particle size depends on the post-treatment by drying, grinding and sieving, the particle size is generally between 10 μm and 5 mm, preferably between 50 μm and 2 mm, even more preferably between 200 μm and 850 μm.

Water-soluble associative amphoteric polymer particles may have a regular and spherical shape, like beads, or non-regular.

The term "size of the particles" denotes the average size, in number, of the particles of water-soluble associative amphoteric polymer. It corresponds to the most significant dimension, for example the diameter for spherical particles. It is measured with a laser measuring device using conventional techniques which are part of the knowledge of those skilled in the art. A Mastersizer type device from the Malvern company, for example, the MS2000, may be used for this purpose. This type of apparatus makes it possible to measure, by laser diffraction, the granulometric distribution of particles in liquid medium or in solid form, preferably in a polyphasic suspension.

Water-soluble associative amphoteric polymer particles may have a regular and spherical shape, like beads, or non-regular.

In one particular embodiment according to this invention, the water-soluble associative amphoteric polymer may be in the form of a multiphase suspension of solid particles in a brine or salt solution, or in the form of a multiphase suspension of solid particles in an anhydrous oil, or in the form of a multiphase suspension of solid particles in an oil mixed with a brine or a salt solution.

This invention also relates to a method of preparing a water-soluble associative amphoteric polymer from at least one monomer derived from a sulfonic acid and/or a salt thereof and at least one cationic associative monomer of formula (I), described above, and polymerized in the absence of surfactants.

This invention also relates to the use of said water-soluble associative amphoteric polymer as a rheology modifier and/or suspending agent.

**Subterranean drilling or treatment fluid comprising water-soluble associative amphoteric polymer**

This invention also relates to a subterranean drilling or treatment fluid, comprising said water-soluble associative amphoteric polymer.

- The subterranean drilling or treatment fluid according to the invention generally comprises:- an aqueous fluid advantageously selected from: sea water, brine, fresh water, mud, cement, or spacer fluid;
- The water-soluble associative amphoteric polymer according to the invention, advantageously, between 0.1% and 5.0% by weight, based on the weight of the subterranean drilling or treatment fluid.

Spacer fluid is any liquid used to physically separate one liquid from another. By way of example and without limitation, spacer fluids may be used when changing the type of slurry or to separate slurry from cement during cementing operations. In changing the type of sludge, an oil-based fluid must be separated from a water-based fluid. In this case, the spacer fluid may be a base oil. In separating sludge from cement during cementing operations, a chemically treated water-based spacer fluid typically separates drilling sludge from cement slurry.

The amount of water-soluble associative amphoteric polymer present in the subterranean drilling or treatment fluid depends on many parameters (temperature, salinity, depth...). It is generally between 0.1% and 5% by weight, preferably between 1% and 3% by weight, based on the weight of the subterranean drilling or treatment fluid. Those skilled in the art will know how to adjust this quantity according to the drilling or underground treatment conditions and the desired viscosity.

By brine, we mean a solution comprising water and organic or inorganic salts. The salts may be used to provide sufficient density to the subterranean drilling or treatment fluid, for example, to compensate for pressure during drilling or to reduce interactions between the subterranean drilling or treatment fluid and hydratable clays found underground. Salts may be selected for compatibility between different fluids used in subterranean drilling or treatment operations. For example, the drilling (or subterranean drilling or treatment) fluid and the completion/cleaning fluid may require the same or different phases. Salts may be used to adjust the density of fluids as needed.

The subterranean drilling or treatment fluid according to the invention may additionally and without limitation include other additives and chemicals that are commonly used in the relevant applications, including drilling. These additives may include, for example, diluents, gelling agents, shale inhibitors, pH buffers...

Other materials may be added to the subterranean drilling or treatment fluid to improve the composition thereof. Such other materials may include, for example: additives to reduce or control low temperature rheology or to provide diluent, additives to improve viscosity, additives to control high temperature pressure.

The subterranean drilling or treatment fluid according to the invention may include one or more surfactants.

In one particular embodiment of the invention, the subterranean drilling or treatment fluid according to the invention does not comprise a surfactant.

**Using the water-soluble associative amphoteric polymer**

The water-soluble associative amphoteric polymer according to the invention may be used as a rheology modifier or a suspending agent for underground drilling and processing operations. These underground drilling and

processing operations include, but are not limited to, civil construction drilling operations, geothermal drilling operations, oil drilling operations such as drilling new wells, stimulation treatments such as fracturing operations, completion operations and the process of enhanced oil recovery by sweeping a subsurface formation with a polymer solution, or operations to modify the water permeability of a subsurface formation such as conformation operations.

The water-soluble associative amphoteric polymer according to the invention is well-suited and may be used under all existing temperature conditions. It may be used, for example, at temperatures between 20 and 100°C, or between 100 and 200°C, or between 200 and 300°C. Preferably, the temperature is between 80 and 300°C, more preferably between 100 and 250°C, and even more preferably between 120 and 225°C.

The water-soluble associative amphoteric polymer according to the invention is well-suited and may be used at a pH between 0 and 14. It can be used, for example, at a pH between 0 and 7, or between 6 and 14, or between 10 and 14, or between 4 and 12. The pH depends on the polymer's field of application and in particular on the nature of the subterranean drilling or treatment fluid.

Thus, when the subterranean drilling or treatment fluid is seawater, brine, fresh water, mud, or spacer fluid for oil and gas or geothermal applications, such as, but not limited to, geothermal drilling operations, petroleum drilling operations such as drilling new wells, stimulation treatments such as fracturing operations, completion operations, and the improved process of recovering oil by sweeping a subterranean formation with a polymer solution, or operations to modify the water permeability of a subterranean formation such as conformation operations, the pH of the subterranean drilling or treatment fluid is generally between 0 and 14, preferably between 4 and 12, and even more preferably between 6 and 10.

When the subterranean drilling or treatment fluid is a cement for construction applications, such as, but not limited to, civil construction operations, geothermal construction operations, or construction of new oil and gas wells, the pH of the subterranean drilling or treatment fluid is generally between 0 and 14, preferably between 8 and 14 and even more preferably between 10 and 14.

The water-soluble associative amphoteric polymer according to the invention is well-suited and may be used under all salinity conditions of the subterranean drilling or treatment fluid. It can be used for example for fluids with a salinity between 1000 mg/L of salts and saturation of the fluid, preferably between 10,000 mg/L and saturation of the fluid, even more preferably between 50,000 mg/L and saturation of the fluid. The salts in the fluid may include monovalent salts, divalent salts, trivalent salts, and mixtures thereof. The water-soluble associative amphoteric polymer according to the invention may be dissolved in a mixer before use. As an example, and in a non-limiting way, such a mixer may be selected among reactors with agitators, loop reactors, static mixers, microreactors, and piston reactors. This may include a PSU (Polymer Slicing Unit) that both grinds and disperses the polymer in powder form into the dissolution water.

The water-soluble associative amphoteric polymer according to the invention may be added at one time, sequentially, discontinuously, or continuously during the preparation of the subterranean drilling or treatment fluid. It may also be an in-line injection.

The invention and the advantages thereof will be better understood from the following examples given to illustrate the invention, and not in a restrictive manner.

## EXAMPLES

A list of abbreviations used in the following examples is given below:

- ATBS: 2-acrylamido-2-methylpropane sulfonic acid,
- C16: An associative monomer of formula (I) where $R_1$ and $R_2$ are hydrogen atoms and $R_3$ is a linear alkyl chain of 16 carbon atoms,
- TAAC: Tetraallylammonium chloride,
- ATBS-Na: Sodium salt of 2-acrylamido-2-methylpropane sulfonic acid,
- AMD: Acrylamide,
- AA: Acrylic acid,
- C12: An associative monomer of formula (I) where $R_1$ and $R_2$ are hydrogen atoms and $R_3$ is a linear alkyl chain of 12 carbon atoms,
- C22: An associative monomer of formula (I) where $R_1$ and $R_2$ are hydrogen atoms and $R_3$ is a linear alkyl chain of 22 carbon atoms.

### Polymer preparation

***Polymer 1 (invention)*** - Polymer 1 is prepared using a 2-liter double-walled reactor equipped with a distillation column, a pH probe, a thermometer, a powerful stirrer, a nitrogen injection nozzle, and an ammonia gas inlet. 1400 g of pure tertiobutanol (2-methyl-2-propane) and 35 g of water are initially introduced into the reactor. 262.8 g of acidic

ATBS are then added with stirring. The monomer is then completely neutralized using a stream of ammonia gas that is passed through the suspension until the pH reaches 6.2, at which point the introduction of ammonia is stopped. 7.4 g of C16 (at a weight concentration of 61.3% in water) and 7.3 g of TAAC are then added. The solution is then degassed with nitrogen for one hour while the temperature is raised to 64°C. When the temperature is stabilized at 64°C, 1.6 g of dibenzoyl peroxide is added to the solution to initiate the reaction and precipitate the formed polymer. Once the temperature has stopped rising, the solvent is vacuum evaporated to directly obtain a dry powder with a very small particle size of about 1 μm.

***Polymer 2 (invention)*** - In a 2L beaker, 1499g of ATBS-Na (at a concentration of 50% by weight in water) and 1g of C16 are dissolved to obtain a content of about 50% active ingredient. The solution is then stirred, cooled, and neutralized by adding caustic soda. The solution is then placed in a Dewar flask and degassed with a nitrogen stream to remove oxygen. The polymerization is initiated by a red/ox couple. The resulting gel is left in the Dewar's flask for 3 hours. The gel is then crushed and left to dry overnight in a furnace. A white powder is obtained and is ground again.

***Polymer 3 (comparative example)*** - Traditionally, polymer 3 is prepared by reverse emulsion (water in oil, in the presence of surfactants) as described in US 2020/040252, with the composition described in Table 1 below.

***Polymer 4 (comparative example)*** - The same process as that used for polymer 2 is applied, except that ATBS-Na is replaced by acrylic acid (at a concentration of 50% by weight in water) which is neutralized with soda until the pH reaches 7.

***Polymer 5 (comparative example)*** - The same process as that used for polymer 2 is applied, in which C16 is replaced by stearyl acrylate.

***Polymer 6 (invention)*** - The same process as that used for polymer 1 is applied, except that 238 g of ATBS is used with 52.2 g of AMD (50% by weight in water), 8.8 g of C16 in 1372 g of pure tertiary butanol (2-methyl-2-propane) and 24.1 g of water.

***Polymer 6' (comparative example)*** - The same process as that used for polymer 1 is applied, except that only 231.6 g of ATBS is used with 66g of AMD (50% by weight in water), 9.2g of C16 in 1372 g of pure tertiary butanol (2-methyl-2-propane) and 24.1g of water.

***Polymer* 7 *(comparative example)*** - The same process as that used for polymer 1 is applied, except that only 231.6 g of ATBS is used with 66g of AMD (50% by weight in water), 9.2g of C16 in 1372g of pure tertiary butanol (2-methyl-2-propane) and 24.1g of water.

***Polymer* 7' *(invention)*** - The same process as that used for polymer 1 is applied, except that 238 g of ATBS is used with 52.2 g of AMD (50% by weight in water), 8.8 g of C16 in 1372 g of pure tertiary butanol (2-methyl-2-propane) and 24.1 g of water.

***Polymer 8 (invention)*** - The same process as that used for polymer2 is applied, in which C16 is replaced by C12.

***Polymer 9 (invention)*** - The same process as that used for polymer2 is applied, in which C16 is replaced by C22.

All the polymers prepared are summarized in Table 1.

Table 1: Polymers prepared (CE = comparative example)

| Polymer | Compositions in % molar | | | | Method of polymerizatio n |
|---|---|---|---|---|---|
| | ATB S | AA | AMD | Associative | |
| 1 | 99 | | | 1 (C16) | Precipitation |
| 2 | 99 | | | 1 (C16) | Gel |
| 3 (CE) | 99 | | | 1 (C16) | Inverse emulsion |
| 4 (CE) | | 99 | | 1 (C16) | Gel |
| 5 (CE) | 99 | | | 1 (stearyl acrylate) | Gel |
| 6 | 75 | | 24 | 1 (C16) | Precipitation |
| 6' (CE) | 70 | | 29 | 1 (C16) | Precipitation |
| 7 (CE) | 70 | 29 | | 1 (C16) | Precipitation |
| 7' | 75 | 24 | | 1 (C16) | Precipitation |
| 8 | 99 | | | 1 (C12) | Gel |
| 9 | 99 | | | 1 (C22) | Gel |

***Drilling fluid preparation***

A variety of drilling fluids are prepared comprising polymers 1 to 9. The drilling fluid F1 comprises polymer 1, the drilling fluid F2 comprises polymer 2 and so on.

Drilling fluids are prepared by mixing calcium chloride $CaCl_2$, defoamer, buffer solution (NaOH in water) and water with a Hamilton Beach mixer for 10 minutes. CaCOs is then added and mixed for 10 minutes. Finally, the polymer is slowly added and mixed with the drilling fluid for 20 minutes.

Different drilling fluids were prepared (Table 2).

Table 2: Drilling fluids prepared

| *Compositions* | | | | | | | | | | | |
|---|---|---|---|---|---|---|---|---|---|---|---|
| | F1 (g) | F2 (g) | F3 (g) | F4 (g) | F5 (g) | F6 (g) | F6' (g) | F7 (g) | F7' (g) | F8 (g) | F9 (g) |
| Water | 315 | 315 | 315 | 315 | 315 | 315 | 315 | 315 | 315 | 315 | 315 |
| $CaCl_2$ | 135 | 135 | 135 | 135 | 135 | 135 | 135 | 135 | 135 | 135 | 135 |
| Flofoam S15 (Defoamer) | 0.5 | 0.5 | 0.5 | 0.5 | 0.5 | 0.5 | 0.5 | 0.5 | 0.5 | 0.5 | 0.5 |
| NaOH | 1 | 1 | 1 | 1 | 1 | 1 | 1 | 1 | 1 | 1 | 1 |
| $CaCO_3$ | 35 | 35 | 35 | 35 | 35 | 35 | 35 | 35 | 35 | 35 | 35 |
| Polymer 1 - Invention | 8 | | | | | | | | | | |
| Polymer 2 - CE | | 8 | | | | | | | | | |
| Polymer 3 - CE | | | 8 | | | | | | | | |
| Polymer 4 - CE | | | | 8 | | | | | | | |
| Polymer 5 - CE | | | | | 8 | | | | | | |
| Polymer 6 - Invention | | | | | | 8 | | | | | |
| Polymer -' - CE | | | | | | | 8 | | | | |
| Polymer 7 - CE | | | | | | | | 8 | | | |
| Polymer-' - Invention | | | | | | | | | 8 | | |
| Polymer 8 - Invention | | | | | | | | | | 8 | |
| Polymer 9 - Invention | | | | | | | | | | | 8 |

***Example 1 -*** *Resistance test at 121°C and 540glL salinity*

The rheological properties of polymers 1 through 9 were evaluated in drilling fluids F1 through F9 (see Tables 2 through 4).

Samples of fluids F1 to F9 are stability tested at 121°C for 16h in a roller furnace (Table 3). They are then aged in a standard furnace at 121°C for another 7 days in static position (Table 4). These two tests simulate the real stresses that polymers will face over time in underground formations.

Rheological tests are performed with a Grace M 3600 rheometer. Constant shear stresses (direct viscometer reading) at multiple rotation rates, 600, 300, 200, 100, 6 and 3 rpm (rotation per minute), are recorded and shown in Tables 3 and 4.

During the rheological tests, the samples are subjected to the following protocol:

* 60 seconds at 600 rpm to stabilize/homogenize the sample, no viscosity measurement,
* 30 seconds at 3 rpm, then the viscosity is measured at 3 rpm,
* 30 seconds at 6 rpm, then the viscosity is measured at 6 rpm,
* 30 seconds at 100 rpm, then the viscosity is measured at 100 rpm,
* 30 seconds at 200 rpm, then the viscosity is measured at 200 rpm,
* 30 seconds at 300 rpm, then the viscosity is measured at 300 rpm,
* 30 seconds at 600 rpm, then the viscosity is measured at 600 rpm,

* 30 seconds at 300 rpm, then the viscosity is measured at 300 rpm,
* 30 seconds at 200 rpm, then the viscosity is measured at 200 rpm,
* 30 seconds at 100 rpm, then the viscosity is measured at 100 rpm,
* 30 seconds at 6 rpm, then the viscosity is measured at 6 rpm,
* 30 seconds at 3 rpm, then the viscosity is measured at 3 RPM.

This protocol is reproduced 10 times on the same sample to measure the viscosity at the shear considered. Specifically, when x = 3, 6, 100, 200, or 300 rpm, the viscosity is the average of the up-ramp (3 to 600 rpm) and the down-ramp (600 to 3 rpm) values, at identical rpm, measured 10 times. At 600 rpm, the viscosity is the average of the 10 measurements.

The measured viscosity is expressed in lb./100 $ft^2$ (1 lb./100 $ft^2$ = 0.0488242764 kg/$m^2$ = 0.4788242764 Pa).

Sedimentation is the visual observation of the tendency of the drilling fluid to flocculate. Ideally, no flocculation should be observed, which corresponds to a loss of the polymer's rheological properties present in the drilling fluid.

Table 3: Rheology of F1-F9 compositions after 16 hours at 121°C

| Rheology at 121°C | Results after 16 hours in a roller furnace | | | | | | | | | | |
|---|---|---|---|---|---|---|---|---|---|---|---|
| | F1 | F2 | F3 (CE) | F4 (CE) | F5 (CE) | F6 | F6' (CE) | F7 (CE) | F7' | F8 | F9 |
| 600 lb/100$ft^2$ | 113 | 120 | 65 | Insoluble | 98 | 105 | 95 | 94 | 103 | 98 | 99 |
| 300 lb/100$ft^2$ | 38 | 71 | 35 | | 60 | 65 | 59 | 58 | 63 | 61 | 62 |
| 200 lb/100$ft^2$ | 52 | 54 | 26 | | 48 | 50 | 42 | 42 | 48 | 44 | 44 |
| 100 lb/100$ft^2$ | 35 | 36 | 15 | | 32 | 35 | 27 | 25 | 32 | 27 | 27 |
| 6 lb/100$ft^2$ | 11 | 12 | 2 | | 5 | 11 | 10 | 10 | 11 | 11 | 11 |
| 3 lb/100$ft^2$ | 7 | 9 | 1 | | 3 | 7 | 5 | 5 | 6 | 7 | 7 |
| Sedimentation | No | No | Yes | - | Yes | No | No | No | No | No | No |

Table 4: Percentage of improvement between compositions F6/F6' and F7'/F7 after 16 hours at 121°C in a roller furnace

| Results after 16 hours in a roller furnace | | |
|---|---|---|
| Rheology at 121°C | % of Improvement | |
| | F6/F6' | F7' /F7 |
| 600 lb/100$ft^2$ | 11 | 10 |
| 300 lb/100$ft^2$ | 10 | 9 |
| 200 lb/100$ft^2$ | 19 | 14 |
| 100 lb/100$ft^2$ | 30 | 28 |
| 6 lb/100$ft^2$ | 10 | 10 |
| 3 lb/100$ft^2$ | 40 | 20 |

Table 5: Rheology of F1-F9 compositions after 7 days at 121°C

| Rheology at 121°C | Results after aging in a furnace for 7 days at 121°C in a static position | | | | | | | | | | |
|---|---|---|---|---|---|---|---|---|---|---|---|
| | F1 | F2 | F3 (CE) | F4 (CE) | F5 (CE) | F6 | F6' (CE) | F7 (CE) | F7' | F8 | F9 |
| 600 $lb/100ft^2$ | 107 | 114 | 45 | Insoluble | 58 | 101 | 81 | 79 | 98 | 90 | 89 |
| 300 $lb/100ft^2$ | 64 | 67 | 30 | | 32 | 63 | 45 | 43 | 58 | 50 | 48 |
| 200 $lb/100ft^2$ | 49 | 52 | 24 | | 22 | 48 | 33 | 31 | 44 | 40 | 41 |
| 100 $lb/100ft^2$ | 35 | 34 | 15 | | 11 | 34 | 17 | 17 | 30 | 25 | 24 |
| 6 $lb/100ft^2$ | 11 | 11 | 1 | | 4 | 10 | 7 | 6 | 9 | 8 | 8 |
| 3 $lb/100ft^2$ | 7 | 8 | 1 | | 2 | 7 | 4 | 3 | 7 | 3 | 7 |
| Sedimentation | No | No | Yes | - | Yes | No | Slight | Slight | No | Very Slight | Very Slight |

Table 6: Percentage of improvement between compositions F6/F6' and F7'/F7 after aging in a furnace for 7 days at 121°C in a static position

| Results after aging in a furnace for 7 days at 121°C in a static position | | |
|---|---|---|
| Rheology at 121°C | % of Improvement | |
| | F6/F6' | F7'/F7 |
| 600 $lb/100ft^2$ | 24 | 24 |
| 300 $lb/100ft^2$ | 40 | 34 |
| 200 $lb/100ft^2$ | 45 | 41 |
| 100 $lb/100ft^2$ | 100 | 76 |
| 6 $lb/100ft^2$ | 43 | 50 |
| 3 $lb/100ft^2$ | 75 | 133 |

It may be seen from these tables that the polymers of the invention (F1, F2, F6, F7', F8 and F9) offer better performance under aging conditions. The effect of the rheology modifier and of the suspensive effect is also better for the polymers of the invention with no or very little sedimentation.

During aging, Tables 4 and 6 show an increasing improvement in performance (rheology) while Tables 3 and 5 show a beneficial effect on sedimentation.

## Claims

1. Water-soluble associative amphoteric polymer of at least one monomer derived from a sulfonic acid and/or a salt thereof and at least one associative cationic monomer of formula (I):

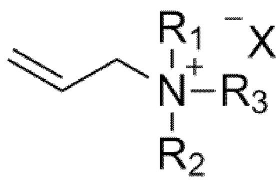 (I)

With:

$R_1$, $R_2$ being, independently of each other, a hydrogen, $CH_3$, or $C_2H_5$;

$R_3$: an alkyl, arylene-alkyl or aryl-alkyl chain having from 8 to 50 carbons;
$X^-$: counterion of negative charge;
the polymer being obtained by polymerization of the monomers in the absence of surfactants;
the amount of monomer derived from a sulfonic acid and/or a salt thereof being at least 75 mol%, relative to the number of moles of polymerized monomers.

**2.** Water-soluble associative amphoteric polymer according to Claim 1, ***characterized* in that** the monomer derived from a sulfonic acid is selected from the group consisting of 2-acrylamido-2-methylpropane sulfonic acid, 2-methacrylamido-2-methylpropane sulfonic acid, styrene sulfonic acid, derivatives of allylether sulfonic acids and 3-allyloxy-2-hydroxypropane sulfonic acid.

**3.** Water-soluble associative amphoteric polymer according to Claim 1 or 2, ***characterized* in that** the monomer is derived from a sulfonic acid is 2-acrylamido-2-methylpropane sulfonic acid.

**4.** Water-soluble associative amphoteric polymer according to any of the preceding claims, ***characterized* in that**, in the associative cationic monomer of formula (I), $R_3$ is an alkyl, arylene-alkyl or aryl-alkyl chain having 10 to 38 carbon atoms.

**5.** A water-soluble associative amphoteric polymer according to any of the preceding claims, ***characterized* in that** the amount of associative cationic monomers is between 0.001 mol% and 10 mol%.

**6.** A water-soluble associative amphoteric polymer according to any of the preceding claims, ***characterized* in that** the water-soluble associative amphoteric polymer consists of 2-acrylamido-2-methylpropane sulfonic acid and/or a salt thereof and at least one cationic associative monomer of formula (I), wherein R3 is an alkyl, arylene-alkyl or aryl-alkyl chain having 8 to 50 carbon atoms.

**7.** Water-soluble associative amphoteric polymer according to any of the preceding claims, ***characterized* in that** the water-soluble associative amphoteric polymer is obtained by gel polymerization or by precipitation polymerization.

**8.** Water-soluble associative amphoteric polymer according to any of the preceding claims, ***characterized* in that** it is in solid form.

**9.** Use of the water-soluble associative amphoteric polymer according to any of claims 1 to 8 as a rheology modifier and/or a suspending agent.

**10.** Subterranean drilling or treatment fluid comprising:

- an aqueous fluid selected from sea water, brine, fresh water, mud, cement, or spacer fluid;
- between 0.1 and 5.0% by weight of the water-soluble associative amphoteric polymer according to any of claims 1 to 7, based on the weight of the subterranean drilling or treatment fluid.

**11.** Use of the fluid according to claim 10 as a rheology modifier or a suspending agent for subterranean drilling or treatment operations.

**12.** Use according to claim 11, ***characterized* in that** the use temperature used is between 80°C and 300°C.

**13.** Use according to any of claims 11 or 12, ***characterized* in that** the salinity of the fluid is between 1000 mg/L of salts and saturation of the fluid.

**Patentansprüche**

**1.** Wasserlösliches assoziatives amphoteres Polymer aus mindestens einem von einer Sulfonsäure und/oder einem Salz derselben abgeleiteten Monomer und mindestens einem assoziativen kationischen Monomer folgender Formel (1):

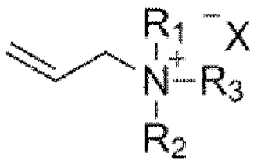

(I)

wobei:

$R_1$, $R_2$ unabhängig voneinander Wasserstoff, $CH_3$ oder $C_2H_5$ sind;
$R_3$: eine Alkyl-, Arylen-Alkyl- oder Aryl-Akyl-Kette mit 8 bis 50 Kohlenstoffen ist;
X: Gegenion mit negativer Ladung ist;
das Polymer durch Polymerisation der Monomere in Abwesenheit von Tensiden erhalten wird;
die Menge des von einer Sulfonsäure und/oder einem ihrer Salze abgeleiteten Monomers mindestens 75 Mol-%, bezogen auf die Anzahl der Mole der polymerisierten Monomere, beträgt.

**2.** Wasserlösliches assoziatives amphoteres Polymer nach Anspruch 1, **dadurch *gekennzeichnet,* dass** das von einer Sulfonsäure abgeleitete Monomer ausgewählt ist aus der Gruppe bestehend aus 2-Acylamido-2-methylpropansulfonsäure, 2-Methacrylamido-2-methylpropansulfonsäure, Styrolsulfonsäure, Derivaten von Allylethersulfonsäuren und 3-Allyloxy-2-hydroxypropansulfonsäure.

**3.** Wasserlösliches assoziatives amphoteres Polymer nach Anspruch 1 oder 2, **dadurch *gekennzeichnet,* dass** es sich bei dem Monomer, das von einer Sulfonsäure abgeleitet ist, um 2-Acrylamido-2-methylpropansulfonsäure handelt.

**4.** Wasserlösliches assoziatives amphoteres Polymer nach einem der vorhergehenden Ansprüche, **dadurch *gekennzeichnet,* dass** $R_3$ in dem assoziativen kationischen Monomer der Formel (I) eine Alkyl-, Arylen-Alkyl- oder Aryl-Alkylkette mit 10 bis 38 Kohlenstoffatomen ist.

**5.** Wasserlösliches assoziatives amphoteres Polymer nach einem der vorhergehenden Ansprüche, **dadurch *gekennzeichnet,* dass** die Menge an assoziativen kationischen Monomeren zwischen 0,001 Mol-% und 10 Mol-% liegt.

**6.** Wasserlösliches assoziatives amphoteres Polymer nach einem der vorhergehenden Ansprüche, **dadurch *gekennzeichnet,* dass** das wasserlösliche assoziative amphotere Polymer aus 2-Acrylamido-2-methylpropansulfonsäure und/oder einem Salz davon und mindestens einem kationischen assoziativen Monomer der Formel (I) besteht, wobei $R_3$ eine Alkyl-, Arylen-Alkyl- oder Aryl-Alkylkette mit 8 bis 50 Kohlenstoffatomen ist.

**7.** Wasserlösliches assoziatives amphoteres Polymer nach einem der vorhergehenden Ansprüche, **dadurch *gekennzeichnet,* dass** das wasserlösliche assoziative amphotere Polymer durch Gelpolymerisation oder durch Fällungspolymerisation erhalten wird.

**8.** Wasserlösliches assoziatives amphoteres Polymer nach einem der vorhergehenden Ansprüche, **dadurch *gekennzeichnet,* dass** das wasserlösliche assoziative amphotere Polymer in fester Form vorliegt.

**9.** Verwendung des wasserlöslichen assoziativen amphoteren Polymers nach einem der Ansprüche 1 bis 8 als Rheologiemodifizierer und/oder Suspensionsmittel.

**10.** Unterirdische Bohrspülmittel oder Behandlungsflüssigkeit, bestehend aus:

- einem wässrigen Fluid, ausgewählt aus Meerwasser, Salzwasser, Süßwasser, Schlamm, Zement oder Abstandsflüssigkeit;
- zwischen 0,1 und 5,0 Gew.-% des wasserlöslichen assoziativen amphoteren Polymers nach einem der Ansprüche 1 bis 7, bezogen auf das Gewicht des unterirdischen Bohrspülmittels oder der Behandlungsflüssigkeit.

**11.** Verwendung der Flüssigkeit nach Anspruch 10 als Rheologiemodifizierer oder Suspensionsmittel für unterirdische Bohr- oder Behandlungsvorgänge.

**12.** Verwendung nach Anspruch 11, **dadurch *gekennzeichnet,* dass** die verwendete Verwendungstemperatur zwischen 80°C und 300°C liegt.

**13.** Verwendung nach einem der Ansprüche 11 oder 12, **dadurch *gekennzeichnet,* dass** der Salzgehalt der Flüssigkeit zwischen 1.000 mg/l Salze und der Sättigung der Flüssigkeit liegt.

## Revendications

**1.** Polymère amphotérique associatif hydrosoluble d'au moins un monomère dérivé d'un acide sulfonique et/ou un de ses sels et d'au moins un monomère cationique associatif de formule (I) :

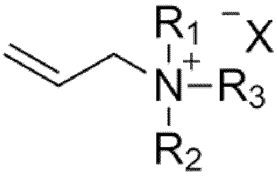

(I)

avec :

$R_1$ et $R_2$ étant, indépendamment l'un de l'autre, un hydrogène, $CH_3$, ou $C_2H_5$ ;
$R_3$ : une chaîne alkyle, arylène-alkyle ou aryl-alkyle comportant de 8 à 50 carbones ;
$X^-$ : contre ion de charge négative ;
le polymère étant obtenu par polymérisation des monomères en l'absence de tensioactifs ;
la quantité de monomère dérivé d'un acide sulfonique et/ou un ses sels étant d'au moins 75 mol%, par rapport au nombre de moles de monomères polymérisés.

**2.** Polymère amphotérique associatif hydrosoluble selon la revendication 1, ***caractérisé* en ce que** le monomère dérivé d'un acide sulfonique est choisi dans le groupe constitué par l'acide 2-acrylamido-2-méthylpropane sulfonique, l'acide 2-méthacrylamido-2-méthylpropane sulfonique, l'acide styrène sulfonique, les dérivés d'acides allylether sulfoniques et l'acide 3-allyloxy-2-hydroxypropane sulfonique.

**3.** Polymère amphotérique associatif hydrosoluble selon la revendication 1 ou 2, ***caractérisé* en ce que** le monomère dérivé d'un acide sulfonique est l'acide 2-acrylamido-2-méthylpropane sulfonique.

**4.** Polymère amphotérique associatif hydrosoluble selon l'une des revendications précédentes, ***caractérisé* en ce que**, dans le monomère cationique associatif de formule (I), $R_3$ est une chaîne alkyle, arylène-alkyle ou aryl-alkyle ayant 10 à 38 atomes de carbone.

**5.** Polymère amphotérique associatif hydrosoluble selon l'une des revendications précédentes, ***caractérisé* en ce que** la quantité de monomères cationiques associatifs est comprise entre 0,001 mol% et 10 mol%.

**6.** Polymère amphotérique associatif hydrosoluble selon l'une des revendications précédentes, ***caractérisé* en ce que** le polymère amphotérique associatif hydrosoluble est constitué d'acide 2-acrylamido-2-méthylpropane sulfonique et/ou un de ses sels et d'au moins un monomère cationique associatif de formule (I), où R3 est une chaîne alkyle, arylène-alkyle ou aryl-alkyle ayant 8 à 50 atomes de carbone.

**7.** Polymère amphotérique associatif hydrosoluble selon l'une des revendications précédentes, ***caractérisé* en ce que** le polymère amphotérique associatif hydrosoluble est obtenu par polymérisation en gel ou par polymérisation par précipitation.

**8.** Polymère amphotérique associatif hydrosoluble selon l'une des revendications précédentes, ***caractérisé* en ce qu'**il se présente sous forme solide.

**9.** Utilisation du polymère amphotérique associatif hydrosoluble selon l'une des revendications 1 à 8 comme modificateur de rhéologie et/ou agent suspensif.

**10.** Fluide de forage ou de traitement souterrain comprenant :

- un fluide aqueux choisi parmi : l’eau de mer, une saumure, une eau douce, une boue, un ciment, ou un fluide d’espacement ;
- entre 0,1 et 5,0 % en poids du polymère amphotérique associatif hydrosoluble selon l’une des revendications 1 à 7, par rapport au poids du fluide de forage ou de traitement souterrain.

**11.** Utilisation du fluide selon la revendication 10 comme modificateur de rhéologie ou agent suspensif pour des opérations de forage ou de traitement souterrain.

**12.** Utilisation selon la revendication 11, ***caractérisée* en ce que** la température d’utilisation est comprise entre 80 °C et 300 °C.

**13.** Utilisation selon la revendication 11 ou 12, ***caractérisée* en ce que** la salinité du fluide est comprise entre 1000 mg/L de sels et saturation du fluide.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 105670576
- CN 103113518
- CN 102372818
- WO 2014183495 A
- CN 103320114
- CN 107841303
- CN 108192588
- CN 106190088
- US 10759746 B
- US 2020040252 A

### Non-patent literature cited in the description

- **S. BIGGS ; J. SELB ; F. CANDAU.** *Effect of surfactant on the solution properties of hydrophobically modified polyacrylamide*